# EUROPÄISCHE PATENTSCHRIFT

(11) **EP 3 355 007 B1**
(45) Veröffentlichungstag und Bekanntmachung des Hinweises auf die Patenterteilung: **29.04.2020**
(21) Anmeldenummer: 17153488.6
(22) Anmeldetag: 27.01.2017
(51) Int. Cl.: F25D 17/06, H02P 6/00

(54) **KÜHLGERÄTE-LÜFTERVORRICHTUNG UND ULTRA-NIEDRIGTEMPERATUR-KÜHLGERÄTE**
COOLING DEVICE FAN AND ULTRA LOW TEMPERATURE COOLING DEVICE
DISPOSITIF DE VENTILATION D'APPAREIL DE RÉFRIGÉRATION ET APPAREIL DE RÉFRIGÉRATION À TRÈS BASSE TEMPÉRATURE

(43) Veröffentlichungstag der Anmeldung: 01.08.2018
(73) Patentinhaber: Eppendorf AG, 22339 Hamburg (DE)
(72) Erfinder: Clarke, Simon, Essex, CO2 8NE (GB); Manson, George, Maldon, Essex, CM9 4LJ (GB); Uhlendorf, Rüdiger, 37127 Dransfeld (DE)
(74) Vertreter: Patentanwälte Behrmann Wagner PartG mbB

(56) Entgegenhaltungen:
- CN-U- 201 499 074
- JP-A- 2000 258 026
- JP-A- 2001 339 984
- US-A- 3 759 051

## Beschreibung

Die vorliegende Erfindung betrifft eine Kühlgeräte-Lüftervorrichtung nach dem Oberbegriff des Patentanspruchs 1. Ferner betrifft die vorliegende Erfindung ein Ultra-Niedrigtemperatur-Kühlgerät aufweisend eine solche Lüftervorrichtung.

Aus dem Stand der Technik ist allgemein bekannt, Kühlgeräte, insbesondere Ultra-Niedrigtemperatur-Kühlgeräte (ULT = Ultra-Low-Temperature-Freezers), also Kühlgeräte für einen Nutzkühlbereich auf einer Kühltemperatur unterhalb von -40°C, typischerweise sogar unterhalb von -60°C bis hin zu -80°C und darunter, mit Lüftervorrichtungen für die Wärmeabfuhr der beim thermodynamischen Prozess am Wärmetauscher (Verflüssiger) entstehende Prozesswärme sowie ggf. zur Kühlung der eingesetzten Kühlgerätekompressoren zu versehen. Diese Lüftervorrichtungen, üblicherweise aufweisend mindestens einen einen Lüfterrotor antreibenden Lüftermotor, sind geeignet in einem Luftführungskanal, typischerweise am oder in einem Bodenbereich eines Kühlgerätegehäuses, vorgesehen und führen durch einen Lufteinlass eintretende Luft über den Verflüssiger sowie die Kompressoren bis zu einem Luftauslass und sorgen so für günstige bzw. für den Kühlbetrieb erforderliche Betriebsbedingungen der Aggregate.

Derartig, als gattungsbildend und allgemein bekannt vorausgesetzte Kühlgeräte werden üblicherweise für industrielle bzw. Forschungszwecke eingesetzt, wobei ein typischer Einsatzzweck dieser Vorrichtungen eine Langzeitkühlung ist: Geeignet als Kühlgut vorgesehene, biologische oder medizinische Proben od.dgl. Inhalte werden üblicherweise mehrere Wochen oder gar Monate auf diesen (Ultra-Niedrigtemperatur-) Zieltemperaturen aufbewahrt, etwa mit dem Zweck, entsprechende gesetzliche Vorgaben einzuhalten.

Neben einem elektrischen Energieverbrauch sowie der Kompressoren, als auch der zur Kühlung sowie zur Wärmeabfuhr vom Wärmetauscher eingesetzten Lüftermotoren spielt insbesondere auch in einem Dauerbetrieb die von diesen Lüftermotoren ausgehende Geräuschemission eine zunehmend wichtige Rolle. Abhängig von einem Standort eines üblicherweise mit der gattungsgemäßen Lüftervorrichtung versehenen Kühlgerätesystems erscheint häufig ein Lüftergeräusch einer derartigen Lüftervorrichtung störend, und zwar insbesondere dann, wenn, etwa in einem stationären (Dauer-)Kühlbetriebszustand am oder in der Nähe einer Zielkühltemperatur der Kühlgerätekompressor (üblicherweise auch als Mehrzahl von Kompressoren in Form einer sogenannten Kaskade angeordnet) mit abgesenkter Kühlleistung bzw. reduzierten Kompressormotordrehzahlen läuft (wobei häufig auch ein derartiger Kompressor zusätzlich geräuschgedämmt ist). So verursacht dann nicht nur der (üblicherweise bei einer festen Drehzahl betriebene, als Wechselspannungsmotor ausgestaltete) Lüftermotor selbst potentiell störende Geräusche, auch erzeugen die luftzugwirksamen Blätter des Lüfterrotors, üblicherweise betrieben bei Drehzahlen von etwa 1300 bis 1400 min⁻¹, für störende Geräusche (sog. "fan tip noise", also durch Lüfterblätter bewirktes Rauschen). Da gattungsgemäße Lüftermotoren selbst in ihrer Drehzahl bzw. Umdrehungsgeschwindigkeit üblicherweise ungeregelt betrieben werden (nicht zuletzt als die gattungsgemäß eingesetzten Motoren, auch aus Kostengründen, eine Drehzahlregelung nicht ohne weiteres ermöglichen) und üblicherweise der Betrieb eines Lüftermotors in Verbindung mit der Ansteuerung eines zugeordneten Kompressors steht (also der Lüftermotor - konstant - synchron mit dem Kühlgerätekompressor betriebenen wird) erfolgt der Lüftermotorbetrieb und die damit verbundene Geräuschemission kontinuierlich während des Kompressorbetriebs, mit praktisch unverändertem hohen Geräuschniveau.

Zusätzlich verbunden mit dem üblicherweise ungeregelten und damit lediglich digital ein-/ausgeschalteten Lüftermotor ist der elektrische Energieverbrauch; unabhängig von einem tatsächlichen Wärmeableitungs- bzw. Kühlungsbedarf des durch die gattungsgemäße Lüftervorrichtung zu kühlenden Wärmetauschers sowie Kompressors erfolgt der Lüfterbetrieb auf Nenn- bzw. Soll-Leistung, wobei, im Hinblick auf zu kühlende Leistungsspitzen des zugeordneten Kühlkreislaufs, hier üblicherweise sogar eine gewisse Überdimensionierung der Lüfterleistung und damit des Lüftermotors vorgenommen wird, um einen ineffizienten Betrieb des Kühlkreislaufs bei derartigen Kühlleistungsspitzen zu vermeiden. Dies führt dann jedoch zu einem Effizienznachteil bei Betriebssituationen geringerer Kühlleistung des Kühlgerätekompressor (also etwa bei einem stationären Betrieb einer Soll-Kühltemperatur). Selbst hier wird dann nämlich der Kühlkreislauf mit der vollen Lüfterleistung der Wärmetauscher und der Lüftervorrichtung beaufschlagt, was wiederum, eine Energieeffizienz vermindernd, eine erhöhte Kompressorleistung bedingt, da der Kühlgerätekompressor (bei einem derartigen reduzierten Kühlleistungsbetrieb) durch den nach wie vor fließenden hohen Luftstrom nicht (mehr) auf einer optimierten Arbeitstemperatur bzw. einem optimierten Arbeitspunkt läuft.

Aus der US 3,759,051 B ist ein Kühlschrank des Typs mit Gefrier- und Kühlräumen und einem Ventilator zur Luftzirkulation über den Verdampfer bekannt, bei dem die Effizienz des Betriebs durch die Verwendung eines bürstenlosen Gleichstrommotors mit variabler Drehzahl als Antriebsmotor für den Ventilator verbessert wird.

Die JP 2001 339 984 A lehrt zur Vermeidung von Kostensteigerungen und unnötigem Stromverbrauch bei einem Einschaltstrom eines bürstenlosen DC-Motors für einen Lüfter in einem Kühlschrank die Zeit für die Inbetriebnahme einer Stromquellenschaltung zu verlängern. Die Erhöhung der Kosten wird durch die Regelung des Einschaltstroms beim Starten des bürstenlosen Gleichstrommotors verhindert und unnötiger Stromverbrauch wird vermieden.

Aus der JP 2000 258 026 A ist weiter bekannt für eine Kühlvorrichtung zwei Ventilatoreinrichtungen vorzusehen.

Die CN 2014 99 074 U beschreibt weiter einen Lüftermotor mit einem bürstenlosen Gleichstrommotors, der darauf abzielt, einen bürstenlosen Gleichstromventilator mit integrierter Struktur, effizienter Leistung und zuverlässigem Betrieb für einen frostfreien Kühlschrank zu liefern. Der bürstenlose DC-Lüftermotor für einen frostfreien Kühlschrank besteht aus einer hinteren Endabdeckung, einer vorderen Endabdeckung und einem Statormodul sowie einem Rotormodul, die durch Schließen der beiden Endabdeckungen abgedichtet sind, wobei im Motor ein Leistungssteuerungsmodul angeordnet und mit Dichtungsmittel fest abgedichtet ist. Mithin ist es Aufgabe der vorliegenden Erfindung, eine Kühlgeräte-Lüftervorrichtung nach dem Oberbegriff des Hauptanspruchs, insbesondere bestimmt für sogenannte Ultra-Niedrigtemperatur-Kühlgeräte, im Hinblick auf ihr Geräuschverhalten zu verbessern und insbesondere auch eine verbesserte Lüftervorrichtung zu schaffen, welche eine Energieeffizienz sowohl des Lüftermotors, als auch der mit dessen Luftkühlung beaufschlagten Kühlaggregate (Wärmetauscher, Kompressor) verbessert zur Vorbeugung von Gefahren durch ausgetretenes Kühlmittel. Dabei ist insbesondere auf eine konstruktiv einfache und den Hardware-Aufwand minimierende Realisierung zu achten, und es ist bevorzugt auch dafür zu sorgen, dass eine derartige verbesserte Lüftervorrichtung in verschiedenen Betriebsumgebungen, insbesondere Betriebsumgebungen mit verschiedenen länderspezifischen nominalen Netzspannungen, einfach und betriebssicher betrieben werden kann.

Die Aufgabe wird durch die Kühlgeräte-Lüftervorrichtung mit den Merkmalen des Hauptanspruchs sowie durch das Ultra-Niedrigtemperatur-Kühlgerät als Verwendung einer derartigen Lüftervorrichtung nach dem unabhängigen Patentanspruch 8 gelöst; vorteilhafte Weiterbildungen der Erfindung sind in den Unteransprüchen beschrieben.

In erfindungsgemäß vorteilhafter Weise ist zunächst der Lüftermotor als bürstenloser, drehzahlregelbarer Gleichspannungsmotor ausgestaltet. Dies gestattet in erfindungsgemäß besonders vorteilhafter Weise nicht nur eine Regelbarkeit der Lüftermotordrehzahl, erfindungsgemäß in Abhängigkeit von einer Betriebs- und/oder Nutzkühlbereichstemperatur, auch ermöglicht es eine derartige Ausgestaltung des Lüftermotors, diesen in besonders einfacher Weise durch eine üblicherweise bereits zum Betreiben des ULT-Kühlgeräts selbst eingesetzte Motor- bzw. Vorschaltelektronik zu betreiben, welche, üblicherweise zusätzlich vorteilhaft mit Spannungswandlermitteln zum Verarbeiten verschiedener eingangsseitiger Versorgungsnetz-Wechselspannungen versehen, dann ausgangsseitig derartiger vorteilhafter Spannungswandlermittel eine Konstantgleichspannung bereitstellen kann, aus welcher dann eine Betriebsspannung für den erfindungsgemäßen Gleichspannungsmotor erzeugt bzw. abgeleitet und ggf. geregelt werden kann.

Damit erreicht die vorliegende Erfindung vorteilhaft, dass eine Drehzahl des Lüftermotors (und damit auch dessen elektrische Leistungsaufnahme) an die tatsächlichen Betriebsbedingungen der damit gekühlten (ULT-) Kühlgeräteaggregate angepasst werden kann, wobei sich erfindungsgemäß die Betriebs- bzw. Nutzkühlbereichstemperatur als besonders geeignete Steuergröße herausgestellt hat, um insoweit (auch) die Drehzahl des Lüftermotors zu beeinflussen. Vorteilhafte Konsequenz ist damit, dass im Fall eines Kompressorbetriebs bei einer Kühl-Soll-Temperatur mit keinen oder nur geringen Temperaturschwankungen, insoweit entsprechend einem stationären Betrieb und potentiell verbunden mit verminderter Kompressorleistung, dann auch die Lüfterdrehzahl abgesenkt werden kann, mit den entsprechenden positiven Auswirkungen auf ein Lüftergeräusch sowie eine elektrische Leistungsaufnahme des erfindungsgemäßen DC-Lüftermotors. Im praktischen Betrieb lässt sich damit etwa die Maximaldrehzahl von ca. 1300 min⁻¹ bis auf ca. 300 bis 400 min⁻¹ verringern; im Hinblick auf eine elektrische Leistungsaufnahme eines typischen Lüftermotors bedeutet dies ein Absinken der elektrischen Leistungsaufnahme von ca. 30 W bei Volllast auf ca. 2 bis 3 W bei der Teillast im angegebenen niedrigen Drehzahlbereich. Dagegen sorgt die Erfindung dafür, dass während Betriebszuständen des Kühlgerätekompressors, bei welchen dieser mit hoher Kompressorleistung betrieben wird, eine entsprechend erhöhte Lüfterdrehzahl des Lüftermotors geregelt wird, so dass zu jedem Zeitpunkt optimale Luftförderbedingungen existieren.

Diese erfindungsgemäße Temperaturregelung geschieht erfindungsgemäß in Abhängigkeit von dem Betriebs- bzw. Nutzkühlbereichstemperatursignal, welches weiterbildungsgemäß durch Temperatursensormittel erzeugt wird, die einem Nutzkühlbereich des Kühlbereichs des Kühlgeräts zugeordnet sein können. Alternativ ist es gleichwohl auch möglich, geeignet am (mindestens einen) Kühlgerätekompressor, etwa an einem zugehörigen Kompressorgehäuse, ein Temperatursignal abzugreifen, wiederum ergänzend oder alternativ können derartige Temperatursignale auch mittelbar aus einem Motor- bzw. Ankerstrom eines Kühlgerätekompressormotors gewonnen werden, oder andere, einer Betriebs- bzw. Nutzkühlbereichstemperatur entsprechende oder proportionale Signale sind entsprechend verwendbar.

Das Betriebs- bzw. Nutzkühlbereichstemperatursignal kann insbesondere auch einen Temperaturgradienten beinhalten, also eine Information darüber, wie bzw. wie stark sich die Temperatur des Nutzkühlbereichs bzw. des Kühlgerätekompressors in einem Zeitintervall verändert hat, um insoweit auf einen Kühlbetrieb beim Herunterkühlen bzw. einen stationären Kühlbetrieb schließen zu können.

Besonders bevorzugt ist es im Rahmen einer Weiterbildung der Erfindung, einen Temperatursensor als Temperatursensormittel zu verwenden, welcher ohnehin bereits dem Nutzkühlbereich zugeordnet ist, etwa mit dem Zweck, mithilfe des so erzeugten Temperatursignals einen Kühlbetrieb des Kühlgerätekompressors (selbst) zu steuern bzw. zu regeln. Auf diese Weise lässt sich dann nicht nur ein bereits vorhandenes und üblicherweise durch den Kühlgerätekompressor vorgeschaltete Elektronik aufbereitetes Sensorsignal nutzen, auch ist, im isolations- und temperatursensiblen Umfeld der Ultra-Niedrigtemperatur-Kühlgeräte, dann auch keine weitere Sensorik mit ggf. zusätzlichen und zu vermeidenden, Wärmebrücken bildenden, Leitungen, Durchführungen od. dgl. notwendig.

Im Rahmen einer integrierten Motor- bzw. Vorschaltelektronik sowohl für den (mindestens einen, bevorzugt jedoch in Mehrzahl und kaskadiert vorgesehenen) Kühlgerätekompressor sowie den Lüftermotor ist es zusätzlich vorteilhaft, diese Elektronik mit einer Leistungsfaktorkorrektur-Funktionalität (PFC = Power-Factor-Correction) zu versehen, um insoweit, neben der Universalität für verschiedenste (nationale) Netzspannungsumgebungen, auch etwaige Netzrückwirkungen in ein derartiges - öffentliches - Versorgungsspannungsnetz zu minimieren.

Eine besonders elegante und für sensible Betriebsumgebungen nützliche Ausführung besteht in den erfindungsgemäß vorgesehenen Verzögerungsmitteln, welche, wiederum bevorzugt im Zusammenhang mit der integrierten Elektronik realisiert, auf den Kühlgerätekompressor wirken und so ausgebildet sind, dass als Reaktion auf ein das Kühlgerät aktivierendes Aktivierungs- bzw. Betriebsstartsignal der Lüftermotor vor einer Aktivierung des Kühlgerätekompressors aktiviert wird, und zwar erfindungsgemäß ein vorbestimmtes Zeitintervall vor einem Aktivieren des Kühlgerätekompressors. Durch eine derartige Ausgestaltung kann, mit signifikanter Auswirkung auf eine Betriebssicherheit einer derartig realisierten Kühlgerätevorrichtung, etwa einem Problem vorgebeugt werden, dass der durch den Kühlgerätekompressor betriebene Kühlkreislauf, bei vorliegend bevorzugten Ultra-Niedrigtemperaturen häufig brennbare Kältemittel enthaltend, ein Leck besitzt, welches dann, bei einer möglichen, mit der Kompressoraktivierung bewirkten Funkenbildung, eine Explosionsgefahr bedeuten kann. Die erfindungsgemäße Lösung einer Lüftermotoraktivierung um eine vorbestimmte Zeit vor dem Einschalten des Kühlgerätekompressors führt dann dazu, dass der Kühl-Luftstrom etwaiges ausgetretenes Kältemittel entfernt oder zumindest so verdünnt, dass das verbleibende Gemisch im Fall des Lecks nicht mehr zündfähig ist und insoweit dann die Explosionsgefahr signifikant vermindert ist. Ein typisches und weiter bevorzugt einzurichtendes Zeitintervall für eine derartige Verzögerung der Kompressoraktivierung gegenüber einer Aktivierung des Lüftermotors liegt bei ca. 5 s, wobei erfindungsgemäße ausgestaltete Zeitintervalle, je nach Konfiguration eines entsprechend ausgerüsteten Kühlgeräts und Betriebsumgebungen bzw. -bedingungen, Anhaltspunkte für eine Bemessung dieser Verzögerung bieten.

Insbesondere der erfindungsgemäße Einsatz eines bürstenlosen Gleichspannungsmotors für die Realisierung des Lüftermotors bietet häufig die Möglichkeit, dass ein drehzahlproportionales Signal zur Auswertung bzw. Betriebszustandsüberwachung des Lüftermotors zur Verfügung steht (sei es über die den DC-Motor antreibende Regelschleife, sei es über einen separaten Rückkanal einer Motor-Steuerelektronik). Die Auswertung eines derartigen Drehzahl-(Ist-)Signals des erfindungsgemäßen Lüftermotors ermöglicht es dann, mögliche Fehlfunktionen zu detektieren und als Reaktion darauf Einfluss auf etwa auch den Kühl- bzw. Kompressorbetrieb einer entsprechend ausgerüsteten Kühlgerätevorrichtung zu nehmen: So kann etwa, als Reaktion auf ein Aktivieren eines erfindungsgemäßen Lüftermotors, durch Überwachung des zugehörigen Drehzahlsignals festgestellt werden, ob dieser Motor mit einer vorgesehenen Drehzahl arbeitet (etwa durch Abgleich mit z.B. elektronisch gespeicherten Soll-Werten), und es kann bei einem Unterschreiten eines Drehzahlschwellwerts auf eine Fehlfunktion geschlossen werden (etwa einen Lüftermotordefekt oder eine Verstopfung im Luftführungskanal), woraufhin dann eine Fehlermeldung ausgegeben oder gar ein Starten des Kühlgerätekompressor unterbunden werden kann. Ergänzend oder alternativ ermöglicht es eine derartige Lüftermotordrehzahlerfassung bzw. -überwachung, die Lüftermotordrehzahl in Beziehung zu der erfindungsgemäß erfassten Betriebs- bzw. Nutzkühlbereichstemperatur zu setzen und wiederum bei einer vorbestimmten Abweichung von vorgesehenen Soll-Werten bzw. Soll-Wertbereichen entsprechende Fehlersignale auszugeben bzw., zur Vermeidung potentieller Schäden am Kühlgerät, einen Kompressorbetrieb zu deaktivieren.

Auch wenn im Rahmen der vorliegenden Erfindung für die Kühlgeräte-Lüftervorrichtung isoliert Schutz beansprucht wird und insoweit weder das eine bevorzugte Einsatzumgebung anbietende Kühlgerät mit einem zugehörigen Kühlgerätegehäuse, noch der (mindestens eine) Kühlgerätekompressor selbst Gegenstand der Erfindung sein muss, ist gleichwohl eine Verwendung der erfindungsgemäßen Kühlgeräte-Lüftervorrichtung im Rahmen eines Ultra-Niedrigtemperatur-Kühlgeräts eine bevorzugte Realisierung der Erfindung und sieht entsprechend vor, ein derartiges Kühlgerät als Einsatzumgebung für die erfindungsgemäße Lüftervorrichtung zu konfigurieren. Dabei ist es einerseits bevorzugt, die Lüftervorrichtung auf einen (einzelnen) Kühlkreislauf wirken zu lassen, so dass insoweit dann der erfindungsgemäße Luftführungskanal neben Lüftermotor und Lüfterrotor diesen Kompressor im von der Luft durchströmten Bereich aufweist. Andererseits ist es auch denkbar, im Fall einer typischerweise bei sehr niedrigen Soll-Temperaturen kaskadiert vorgesehenen Anordnung einer Mehrzahl von Kühlkreisläufen mit jeweiligen Wärmetauschern und Kühlgerätekompressoren eine entsprechende Mehrzahl von Lüftermotoren einzusetzen, alternativ wiederum lediglich einen Lüftermotor.

Auch wenn die vorliegende Erfindung Ultra-Niedrigtemperaturen als bevorzugtes Einsatzgebiet vorsieht, ist die Erfindung gleichwohl nicht auf diesen Kontext beschränkt, vielmehr bietet es sich gleichermaßen an, die erfindungsgemäße Technologie und deren Weiterbildungen auch für Kühlgeräte einzusetzen, welche andere Temperaturbereiche abdecken, wobei, nicht zuletzt aufgrund der Vorteile der Erfindung in der Energieeffizienz, sich auch mobile Einsätze bzw. eine Verwendung im Zusammenhang mit in Fahrzeugen vorgesehenen Kühlgeräten anbieten kann.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: ein schematisches Blockschaltbild der erfindungsgemäßen Kühlgeräte-Lüftervorrichtung im Zusammenwirken mit einem Wärmetauscher und Kühlgerätekompressor zum Realisieren eines ersten Ausführungsbeispiels der Erfindung und
- Fig. 2:: eine Schemadarstellung eines (für Ultra-Niedrigtemperatur eingerichteten) Kühlgeräts, welches bodenseitig einen die Lüftervorrichtung gemäß Fig. 1 sowie den Kühlgerätekompressor aufweisenden Luftführungskanal ausbildet.

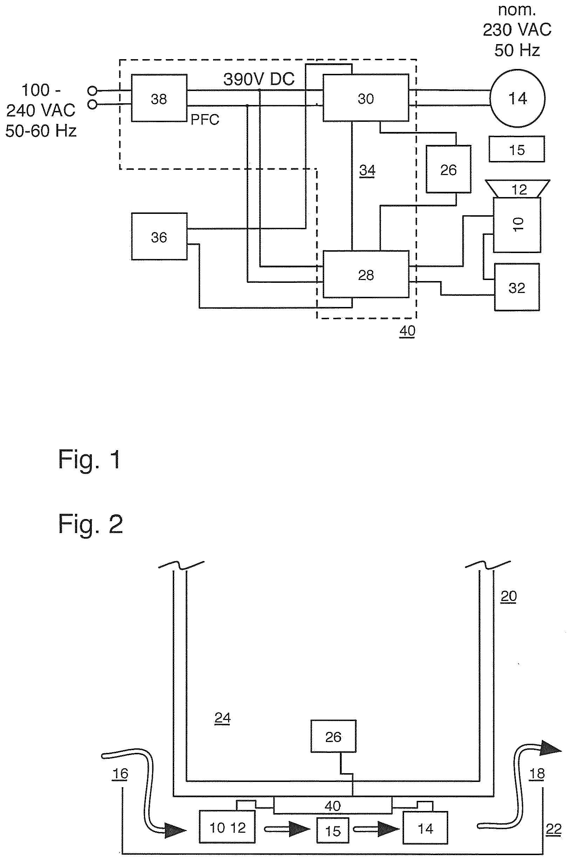

Wie das schematische Blockschaltbild der Fig. 1 logisch bzw. funktional und die Geometriedarstellung der Fig. 2 verdeutlichen, ist ein als bürstenloser DC-Motor ausgestalteter Lüftermotor 10 mit einem ansitzenden Lüfterrotor 12 so relativ zu einem für Ultra-Niedrigtemperatur-Kühlzwecke dimensionierter Wärmetauscher (Verflüssiger) 15 samt Kühlgerätekompressor 14 eines nicht im Detail gezeigten Kühlkreises platziert, dass ein vom Lüfterrotor 12 erzeugter, aus einem (geeignet mit einem Lüftergitter, einem Filter oder dergleichen in nicht näher im Detail gezeigter Weise abgedeckten) Einlass 16 herangeführter und zu einem Auslass 18 geleiteter Kühlluftstrom aus einer Umgebungsluft-Umgebung des in Fig. 2 schematisch gezeigten Kühlgeräts 20 beaufschlagbar ist. Genauer gesagt ist dieser skizzierte Luftführungspfad 16-10-12-15-14-18 in einem Bodenbereich 22 eines Kühlgerätegehäuses des Kühlgeräts 20 ausgebildet, welches als Nutzkühlbereich einen Innenraum 24 zur Aufnahme von Kühlgut anbietet, welches im beschriebenen Ausführungsbeispiel im Ultra-Niedrigtemperaturbereich bei Soll-Temperaturen von -80°C bis -40°C gehalten werden kann.

Zur Detektion einer aktuellen Kühltemperatur dieses Nutzkühlbereichs ist ein Temperatursensor 26 vorgesehen, welcher, schematisch dargestellt, ein sowohl von einer dem Lüftermotor 10 vorgeschalteten Lüftermotorsteuereinheit 28, als auch von einer dem Kompressormotor 14 vorgeschalteten Kompressoransteuereinheit 30 ausgewertet bzw. zur Betriebssteuerung verwendet werden kann. Genauer gesagt ist es bei dem gezeigten Ausführungsbeispiel vorgesehen, das vom Temperatursensor 26 ausgegebene Temperatursignal (als absolutes Temperatursignal, ergänzend oder alternativ auch als Temperaturgradientensignal) mittels der Kompressor-Steuereinheit 30 zu verwenden, um entsprechend einer aktuellen Temperatur im Nutzkühlbereich eine Kühlleistung des Kompressors 14 zu regeln; dies kann vorteilhaft etwa dadurch geschehen (bei bevorzugt gleichbleibenden Kompressordrehzahlen), dass eine Kompressorbetriebsspannung des nominal mit 230 VAC betriebenen Kompressormotors herabgesetzt wird, etwa wenn ein stationärer Betriebszustand bei oder an einer Kühl-Soll-Temperatur erreicht ist. Die Fig. 2 zeigt in Form eines im Bodenbereich 22 vorgesehenen Elektronikmoduls 40, dass die Einheiten 28 und 30 (Fig. 1) auch geeignet zusammengeführt werden können.

Zusätzlich wird im Rahmen des beschriebenen Ausführungsbeispiels das Temperatursignal des Sensors 26 durch die Lüftermotorsteuereinheit 28 verwendet, um entsprechend aktuellen Temperaturbedingungen den Betrieb des Lüftermotors 10, insbesondere dessen Drehzahl, temperaturabhängig (bzw. auch alternativ oder ergänzend temperaturgradientenabhängig) zu regeln. So bedingt etwa ein (in der elektrischen Leistungsaufnahme verminderter) Kompressorbetrieb des Kompressors 14 erfindungsgemäß vorteilhaft, dass lediglich eine verringerte Lüfterleistung, verbunden mit einer Absenkung der Lüfterdrehzahl, erforderlich ist. Entsprechend setzt die Lüftermotorsteuerung die Drehzahl auf einen niedrigeren Wert herab, so dass, durch den dadurch verminderten Luftstrom des Rotors 12, der Kompressor 14 und der Wärmetauscher (Verflüssiger) 15 nach wie vor auf einem optimalen Arbeitspunkt (Arbeitstemperatur) gehalten werden. Ein dem Lüftermotor 10 vorgeschalteter Drehzahldetektor 32, dessen Detektorsignal von der Lüftermotorsteuerung 28 ausgewertet werden kann, ermöglicht dann insoweit das Realisieren einer Drehzahl-Regelschleife für den Lüftermotor, mit einem vom Sensor 26 gegebenen (alternativ auch unmittelbar durch die Kompressoransteuerung 30, temperaturgesteuert, ausgebbaren) Soll-Signal.

Zusätzlich verdeutlicht das Blockschaltbild der Fig. 1, dass das Ausgangssignal des Drehzahldetektors 32, im Abgleich mit geeignet der Lüftermotorsteuerung zugeordneten, gespeicherten Kenn- bzw. Soll-Werten für eine Drehzahl, auch eine wirksame Fehlererfassung des Lüftermotors bzw. des Luftführungskanals vornehmen kann: Sollte etwa ein aktuelles Drehzahldetektorsignal 32 nicht mit einem (vorbestimmten) Ansteuersignal übereinstimmen oder aber zu einem außerhalb vorbestimmter Grenzen liegenden Regeleingriff führen, kann auf eine mögliche Fehlfunktion des Lüftermotors, alternativ auf ein Verstopfen etwa des dem Lufteinlass 16 zugeordneten Filters, geschlossen und über eine Steuerleitung 34 dann die Aktivierung des Kompressormotors durch die Steuereinheit 30 verhindert werden.

Ergänzend oder alternativ eignet sich die Steuerleitung 34 auch, als Reaktion auf eine Aktivierung des Kühlgeräts den Betrieb des Lüftermotors 10 (durch die Lüftermotorsteuerung) zu starten, bevor der Kompressor 14 aktiviert wird; im Rahmen der Lüftermotorsteuerung 28 würde insoweit dann eine Verzögerungseinheit implementiert sein, welches, mittels der Steuerleitung 34, dann die verzögerte Kompressoraktivierung auslöst. Dies kann dem eingangs erläuterten Zweck dienen, zur Vorbeugung von Gefahren durch ausgetretenes Kühlmittel entsprechende Dämpfe mittels des Lüfter-Luftstroms auszutragen oder zu verdünnen, bevor eine Kompressoraktivierung stattfindet.

Zur Ausgabe etwaiger Fehler- oder Status-Informationen zeigt das Blockschaltbild der Fig. 1 noch eine entsprechende Status- bzw. Signalfunktionalität in Form der Einheit 36, und zur Anpassung an verschiedenste (insbesondere auch nationale) Wechselspannungs-Netzumgebungen öffentlicher Netze ist eingangsseitig eine Spannungswandlereinheit 38 ausgebildet, welche, ergänzt durch eine (nicht näher im Detail gezeigte) Leistungsfaktorkorrektur-Funktionalität (PFC), die Netz-Wechselspannung eines weiten Eingangsbereichs zwischen ca. 100 und ca. 240 VAC (mit typischen Netzfrequenzen zwischen 50 und 60 Hz) in eine Gleichspannung von 390 V umsetzt, welche dann erfindungsgemäß weiterbildend auch zum Betrieb der Lüftermotorsteuerung verwendbar ist.

## Patentansprüche

1. Kühlgeräte-Lüftervorrichtung, insbesondere für Ultra-Niedrigtemperatur-Kühlgeräte, mit
einem einen Lüfterrotor (12) aufweisenden und in einem Luftführungskanal zwischen einem Lufteinlass (16), einem Kühlgeräte-Wärmetauscher (15) und/oder einem Kühlgerätekompressor (14) sowie einem Luftauslass (18) an oder in einem Kühlgerätegehäuse (20, 22) vorgesehenen Lüftermotor (10), der über elektrische Versorgungs- und/oder Steuerleitungen mit einem Aggregat des Kühlgeräts, insbesondere dem Kühlgerätekompressor und/oder einer Kühlgerätesteuerelektronik, verbunden ist, wobei derLüftermotor (10) als bürstenloser, drehzahlregelbarer Gleichspannungsmotor realisiert ist,
dessen Betriebsdrehzahl in Abhängigkeit von einem Betriebs- und/oder Nutzkühlbereichstemperatursignal insbesondere des zugeordneten Kühlegerätekompressors geregelt ist
**gekennzeichnet durch**
auf den zugeordneten Kühlgerätekompressor (14) wirkende Verzögerungsmittel, die so ausgebildet sind, dass als Reaktion auf ein Aktivierungssignal und/oder Betriebsstartsignal der Lüftermotor ein vorbestimmtes Zeitintervall vor einem Aktivieren des Kühlgerätekompressor aktiviert werden zur Vorbeugung von Gefahren durch ausgetretenes Kühlmittel entsprechende Dämpfe mittels des Lüfter-Luftstroms auszutragen oder zu verdünnen, bevor eine Kompressoraktivierung stattfindet.

2. Vorrichtung nach Anspruch 1, **gekennzeichnet durch** Temperatursensormittel (26), die einem Nutzkühlbereich des Kühlgeräts zur Erzeugung des Betriebs- bzw. Nutzkühlbereichstemperatursignals zugeordnet sind.

3. Vorrichtung nach Anspruch 2, **dadurch gekennzeichnet, dass** die Temperatursensormittel (26) einer Kompressorsteuerelektronik (30) zur Betriebssteuerung des Kühlgerätekompressors (14) zugeordnet sind.

4. Vorrichtung nach einem der Ansprüche 1 bis 3, **dadurch gekennzeichnet, dass** eine DC-Betriebsspannung für den Lüftermotor durch eine dem Kühlgerätekompressor (14) zugeordnete Motorelektronik (40) erzeugt oder aus dieser abgeleitet ist.

5. Vorrichtung nach Anspruch 4, **dadurch gekennzeichnet, dass** die Motorelektronik (40) Mittel zur Spannungswandlung (38) einer anliegenden Versorgungsnetzwechselspannung auf eine Zwischengleichspannung und bevorzugt Mittel zur Leistungsfaktorkorrektur aufweist,
wobei die Zwischengleichspannung zur Erzeugung der DC-Betriebsspannung für den Lüftermotor beschaltet ist.

6. Vorrichtung nach Anspruch 1, **dadurch gekennzeichnet, dass** die Verzögerungsmittel so eingerichtet und/oder ausgebildet sind, dass das vorbestimmte Zeitintervall zwischen 1 Sek. und 360 Sek., bevorzugt zwischen 2 Sek. und 30 Sek., weiter bevorzugt zwischen 3 Sek. und 10 Sek., beträgt.

7. Vorrichtung nach einem der Ansprüche 1 bis 6, **gekennzeichnet durch** dem Lüftermotor (10) zugeordnete Drehzahlerfassungs- und/oder -überwachungsmittel (32), die, insbesondere bezogen auf ein vorbestimmtes oder vorbestimmbares Verhältnis oder einen Verhältnisbereich der Betriebsdrehzahl bezogen auf die Betriebs-bzw. Nutzkühlbereichstemperatur, zum Erkennen und/oder Anzeigen einer Fehlfunktion als Reaktion auf ein Über- bzw. Unterschreiten eines zugehörigen Verhältnisschwellwerts ausgebildet sind.

8. Ultra-Niedrigtemperatur-Kühlgerät (20), aufweisend mindestens einen Kühlgerätekompressor (14) und die dem Kühlgerätekompressor sowie einem Kühlkreis-Wärmetauscher (15) des Kühlgerätes zugeordnete Kühlgeräte-Lüftervorrichtung nach einem der Ansprüche 1 bis 7, wobei das Ultra-Niedrigtemperatur-Kühlgerät eine zum Verbinden mit einem öffentlichen Spannungsversorgungsnetz ausgebildete Spannungsversorgungseinheit (38) aufweist, die für eine Netzwechselspannung zwischen 85 V und 264 V, insbesondere zwischen 100 V und 230 V, als nominaler Netzwechselspannung ausgebildet ist und eine Betriebs-Gleichspannung für die Kühlgeräte-Lüftervorrichtung bereitstellt.

9. Kühlgerät nach Anspruch 8, **dadurch gekennzeichnet, dass** die Kühlgeräte-Lüftervorrichtung so ausgebildet und eingerichtet ist, dass die Betriebsdrehzahl des Lüftermotors (10) bei einem Kühlbetrieb des Kühlgeräts mit einer Kühl-Solltemperatur des zu kühlenden Nutzkühlbereichs gegenüber einer Lüfterdrehzahl bei einem Herabkühlen des Nutzkühlbereichs durch den Kühlgerätekompressor (14) abgesenkt ist und insbesondere kontinuierlich und/oder entsprechend einem bevorzugt proportionalen Regelverlauf folgend abgesenkt wurde oder wird.

## Claims

1. A refrigerator fan device, in particular for ultra-low temperature refrigerators, comprising
a fan motor (10) which has a fan rotor (12) and which is provided in an air duct between an air inlet (16), a refrigerator heat exchanger (15), and/or a refrigerator compressor (14) and an air outlet (18) on or in a refrigerator housing (20, 22),
said fan motor (10) being connected to a unit of the refrigerator, in particular to the refrigerator compressor and/or to refrigerator control electronics, via electrical supply and/or control lines,
the fan motor (10) being realized as a brushless speed-controllable DC motor
whose operating speed is controlled as a function of an operating and/or used cooling space temperature signal of, in particular, the assigned refrigerator compressor,
**characterized by**
delay means which act on the assigned refrigerator compressor (14) and which are configured such that in response to an activation signal and/or operation start signal, the fan motor is activated a predetermined time interval prior to activation of the refrigerator compressor and that corresponding vapors are emitted or diluted by means of the fan airflow prior to an activation of the compressor in order to prevent the risks associated with leaking refrigerating agents.

2. The device according to claim 1, **characterized by** temperature sensor means (26) which are assigned to a used cooling space of the refrigerator to generate the operating and/or used cooling space temperature signal.

3. The device according to claim 2, **characterized in that** the temperature sensor means (26) are assigned to compressor control electronics (30) for controlling operation of the refrigerator compressor (14).

4. The device according to any one of claims 1 to 3, **characterized in that** a DC operating voltage for the fan motor is generated by or derived from motor electronics (40) that are assigned to the refrigerator compressor (14).

5. The device according to claim 4, **characterized in that** the motor electronics (40) have means for voltage conversion (38) of an applied supply network AC voltage into an intermediate DC voltage and, preferably, means for power factor correction,
the intermediate DC voltage being wired for generating the DC operating voltage for the fan motor.

6. The device according to claim 1, **characterized in that** the delay means are configured and/or designed such that the predetermined time interval is between 1 s and 360 s, preferably between 2 s and 30 s, further preferably between 3 s and 10 s.

7. The device according to any one of claims 1 to 6, **characterized by** speed-detection and/or monitoring means (32) which are assigned to the fan motor (10) and which are configured, in particular regarding a predetermined or predeterminable ratio or ratio range of the operating speed in relation to the operating and/or used cooling space temperature, to detect and/or display a malfunction in response to said ratio exceeding or falling short of a ratio threshold.

8. An ultra-low temperature refrigerator (20) having at least one refrigerator compressor (14) and the refrigerator fan device according to any one of claims 1 to 7 assigned to the refrigerator compressor and to a cooling circuit heat exchanger (15) of the refrigerator, the ultra-low temperature refrigerator having a voltage supply unit (38) designed to be connected to a public power supply network and configured for a mains AC voltage between 85 V and 264 V, in particular between 100 V and 230 V, as a nominal mains AC voltage and providing an operating DC voltage for the refrigerator fan device.

9. The refrigerator according to claim 8, **characterized in that** the refrigerator fan device is designed and configured such that in a cooling mode of the refrigerator at a target cooling temperature of the used cooling space to be cooled, the operating speed of the fan motor (10) is reduced as compared to a fan speed during cooling down of the used cooling space by the refrigerator compressor (14) and has been or is reduced in particular continuously and/or according to a preferred proportional control curve.

## Revendications

1. Dispositif de ventilateur pour les réfrigérateurs, notamment pour les réfrigérateurs à température très basse, ayant
un moteur de ventilateur (10) comprenant un rotor de ventilateur (12) et étant prévu dans un canal de guidage d'air entre une entrée d'air (16), un échangeur de chaleur de réfrigérateur (15) et/ou un compresseur de réfrigérateur (14) et une sortie d'air (18) sur ou dans un boîtier de réfrigérateur (20, 22),
ledit moteur de ventilateur (10) étant relié à un agrégat du réfrigérateur, notamment au compresseur de réfrigérateur et/ou à un système électronique de commande, via des lignes d'alimentation et/ou de commande,
le moteur de ventilateur (10) étant réalisé comme moteur DC sans balais à vitesse réglable,
sa vitesse de fonctionnement étant notamment réglée en fonction d'un signal de température d'une zone de froid fonctionné ou utile du compresseur de réfrigérateur,
**caractérisé par**
des moyens de retardement qui agissent sur le compresseur de réfrigérateur (14) assigné et qui sont réalisés de telle manière que le moteur de ventilateur est activé à un intervalle de temps prédéterminé avant l'activation du compresseur de réfrigérateur en réaction à un signal d'activation et/ou un signal de démarrage de fonctionnement et que des vapeurs correspondantes sont évacués ou dilués au moyen du flux d'air du ventilateur afin de prévenir des risques liés aux réfrigérants avant qu'une activation de compresseur ait réalisé.

2. Dispositif selon la revendication 1, **caractérisé par** des moyens de capteur de température (26) qui sont assignés à une zone de froid utile du réfrigérateur afin de générer du signal de température d'une zone de froid fonctionné ou utile.

3. Dispositif selon la revendication 2, **caractérise en ce que** les moyens de capteur de température (26) sont assignés à un système électronique de commande de compresseur (30) afin de commander le fonctionnement du compresseur de réfrigérateur (14).

4. Dispositif selon l'une quelconque des revendications 1 à 3, **caractérisé en ce qu'**une courant de fonctionnement DC pour le moteur de ventilateur est générée par ou dérivée d'une électronique de moteur (40) qui est assignée au compresseur de réfrigérateur (14).

5. Dispositif selon la revendication 4, **caractérisé en ce que** l'électronique de moteur (40) a des moyens pour convertir une courant (38) d'une courant alternative de réseau d'alimentation existante en une courant intermédiaire DC et, de préférence, des moyens pour corriger un facteur de puissance,
la courant intermédiaire DC étant branchée afin de générer la courant de fonctionnement DC pour le moteur de ventilateur.

6. Dispositif selon la revendication 1, **caractérisé en ce que** les moyens de retardement sont configurés et/ou réalisés de telle manière que l'intervalle de temps est compris entre 1 s et 360 s, de préférence entre 2 s et 30 s, plus préférentiellement entre 3 s et 10 s.

7. Dispositif selon l'une quelconque des revendications 1 à 6, **caractérisé par** des moyens de détection et/ou de surveillance de vitesse (32) qui sont assignés au moteur de ventilateur (10) et qui sont réalisés pour détecter et/ou indiquer une défaillance en réaction à un dépassement ou un sous-passement d'une valeur seuil du rapport correspondant, notamment par rapport à un rapport prédéterminé ou déterminable ou par rapport à un plage de rapport de la vitesse de fonctionnement par rapport à une température d'une zone de froid fonctionné ou utile.

8. Réfrigérateur à température très basse (20), comprenant au moins un compresseur de réfrigérateur (14) et le dispositif de ventilateur pour les réfrigérateurs selon l'une quelconque des revendications 1 à 7 qui est assigné au compresseur de réfrigérateur et à un échangeur de chaleur du circuit de réfrigération (15) du réfrigérateur, le réfrigérateur à température très basse ayant une unité d'alimentation en courant (38) qui est réalisée pour être reliée à un réseau d'alimentation public est qui est réalisée pour une courant alternative de réseau entre 85 V et 264 V, notamment entre 100 V et 230 V comme courant alternative de réseau nominal et qui fournit une courant continue de fonctionnement pour le dispositif de ventilateur pour les réfrigérateurs.

9. Réfrigérateur selon la revendication 8, **caractérisé en ce que** le dispositif de ventilateur pour les réfrigérateurs est réalisé et configuré de telle manière que la vitesse de fonctionnement du moteur de ventilateur (10) est abaissée par rapport à une vitesse de ventilateur pendant le refroidissement par le réfrigérateur à une température souhaitée de refroidissement de la zone de froid utile pendant le refroidissement du réfrigérateur et que la vitesse de fonctionnement a été ou est abaissée, notamment de manière continue et/ou correspondant à un cours régulier, de préférence proportionnel.
